(19)

Europäisches
Patentamt
European
Patent Office
Office européen
des brevets

(11)  **EP 1 914 529 B1**

(12)  **EUROPEAN PATENT SPECIFICATION**

(45) Date of publication and mention
of the grant of the patent:
**18.03.2009 Bulletin 2009/12**

(51) Int Cl.:
*G01J 3/46* *(2006.01)*    *G01J 3/50* *(2006.01)*

(21) Application number: **06425712.4**

(22) Date of filing: **17.10.2006**

(54) **Method for analyzing the apparent colour and the gonio reflectance of an object**

Verfahren zur Analyse der sichtbaren Farbe und der Gonio-Reflexion eines Objekts

Procédé d'analyse de la couleur apparente et de la gonio-réflectance d'un objet

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**23.04.2008 Bulletin 2008/17**

(73) Proprietor: **C.R.F. Società Consortile per Azioni
10043 - Orbassano (Torino) (IT)**

(72) Inventors:
• **Dugand, Marie Marguerite
10043 Orbassano (Torino) (IT)**
• **Repetto, Piermario
10043 Orbassano (Torino) (IT)**

• **Bernard, Stefano
10043 Orbassano (Torino) (IT)**
• **Bollea, Denis
10043 Orbassano (Torino) (IT)**

(74) Representative: **Notaro, Giancarlo
c/o Buzzi, Notaro & Antonielli d'Oulx
Via Maria Vittoria 18
10123 Torino (IT)**

(56) References cited:
**EP-A- 0 335 192        EP-A- 1 694 047
EP-A1- 0 001 178        WO-A-87/07381
DE-A1-7102004 034 16    GB-A- 2 126 717
US-A- 5 793 486         US-A1- 2005 009 450
US-A1- 2006 114 465     US-B1- 6 512 577**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to the field of systems for analyzing the colour of objects. In particular, the invention relates to a system for analysis of the apparent colour which is aimed at objective evaluation of the physical properties responsible for the appearance of objects: the spectral-reflection or spectral-transmission factor, the gloss factor, and the texture of the surfaces being examined.

Apparatus for measuring gonioreflectance are known for example from US 2006/ 0114465, DE 10 2004 034 167 A1 and EP 0 001 178 A1. A combined gloss and color measuring instrument is known from EP 0 335 192 A2.

The purpose of the invention is to provide a method that is able to measure the spectral-reflection/transmission factor, the gloss factor, the gonioreflectance, and the texture of objects, thus rendering possible objective measurement of the appearance and combining within itself a series of features absent in known instruments currently available on the market.

According to the invention, the aforesaid purposes are achieved thanks to a method having the characteristics specified in the annexed Claim 1.

The subsequent dependent claims outline additional preferred and advantageous characteristics of the invention.

As compared to traditional spectrophotometers and glossmeters, used, respectively, for measurements of spectral reflectance/transmittance and shininess, the present invention enables monitoring of the chromatic integrity over time through the visual and numeric control of repositioning of the instrument on the measurement area, and miniaturization of the components, i.e., transportability of the system, and also enables said measurements to be carried out using a non-destructive technique, i.e., without any contact with the object to be analyzed.

In addition, as compared to traditional measurements of spectral reflectance and shininess, the present invention enables analysis of the texture of the surface being examined. Said parameter regards a more extensive portion of surface and represents the variation in colour and shininess over said surface. The instrument in question measures the texture of a surface, processing a digital image by means of appropriate S/W algorithms.

In addition, the instrument in question enables measurement not only of shininess but also of the matrix of gonioreflectance of the surface under examination, which characterizes the diffused reflectance of the surface itself in a much more complete way as compared to a measurement of shininess, in so far as it is associated to different angles of incidence and different angles of diffusion.

Thanks to the visual and numeric control of the positioning of the instrument, said invention enables extension of the traditional analysis of colour to all products having a non-uniform colour of their surface.

In addition, by analyzing surface variations of colour and shininess, it is thus possible to evaluate, in the colour perceived, the extremely important contribution provided by the background of the area that is being observed.

The device according to the invention uses a basic component, constituted by a classic spectrometer, provided with a mobile mirror, or else a beam-splitter (according to what will be illustrated in detail in what follows), which enables monitoring of the region being measured. The spectrometer, or spectrometers, of which use is made in the device according to the invention, possesses or possess the important characteristic of being miniaturized and integrated with the respective algorithms for deconvolution of raw data, in order to reduce, on the one hand, the dimensions of the system, achieving the characteristic of transportability outside the laboratory, and to improve, on the other hand, the spectral resolution of miniaturized spectrometers, so as to bring it up to the CIE (Commission Internationale de l'Éclairage) standards in order to achieve the resolution typical of laboratory and/or research spectrometers, which are typically larger in size.

The other components of the system and the measurement method itself, which will be illustrated in detail in what follows, have the purpose of preventing contact with the object, enabling a control of repositioning of the instrument for ensuring reproducibility of the measurement-acquisition geometry for monitoring the object in time, enabling a comparison measurement with a reference specimen, illuminating the object being measured, measuring the gloss factor, and analyzing the texture.

In order to prevent contact with the object, the position of the optical lens is fixed so as to focus the inspection area by causing the entire instrument to advance progressively until focusing is achieved. This operation also fixes the magnifying ratio of the instrument, a property that is essential for repetition of the measurement.

In order to reposition the instrument, the system is provided with a viewfinder with an image sensor designed to guarantee that each positioning of the instrument is documented by the image of the object seen by the instrument. Repositioning occurs by bringing the image that the instrument is analyzing to coincide with the image corresponding to the first measurement. Display of the images on the monitor of a personal computer will enable visual verification, and the computer itself will enable a numeric control on the possible coincidence between the first image present in the file and the current one. With a view to achieving said purpose, in the case of visual verification of the coincidence between the images themselves will be guaranteed by the absence of "flickering" in the video signal perceived in the alternation of displays of the images themselves; in the case of numeric control, instead, appropriate algorithms guarantee repositioning of the instrument. The two types of repositioning control may both be present, to ensure a finer control, or else one of them can be used without thereby departing from the scope of the claims of the present patent.

The repositioning operation can moreover occur by means of manual or automated displacements of the instrument, with a precision that depends upon the specific application.

Unlike the classic spectroradiometer, which does not envisage the use of a comparison measurement, the instrument according to the invention analyzes also the radiation reflected (or transmitted) by a reference surface set alongside the region being measured. This is particularly useful when it is desired to use, as sources of lighting, sources of the LED (light emitting diode) type. In fact, even though LED sources are extremely robust and compact, enabling provision of a measurement device of reduced dimensions, they are, however, affected by variations in the emission spectrum as a function of the ambient temperature, which renders desirable the use of a reference surface. For said purpose two embodiments are possible:

1. the instrument is provided with a second spectrometer, a condition necessary if the lighting occurs by flashing of a discharge source;

2. in the case of lighting using LEDs or a halogen source, there may be indifferently chosen for the use two spectrometers (as described in point 1) or else just one spectrometer equipped with a mobile mirror designed to send to the input slit of the spectrometer itself, alternatively, the radiation coming from the object being measured or from the reference.

For measurement of the gonioreflectance and of the gloss factor, the instrument according to the invention is provided with a system constituted by a battery of LEDs and a battery of photodetectors arranged symmetrically with respect to the area surveyed, as will be better illustrated in what follows.

Finally, the digital image produced by the image sensor is processed for analysis of the texture.

According to the invention, it is possible, but not necessary, to envisage an image sensor designed to supply an image that is colorimetrically significant and not only useful for repositioning of the instrument and analysis of the texture. In this case, a system of three purposely provided filters may be envisaged combined with three image sensors, for example, with an array of pixels designed to separate the spectrum into three bands of sensitivity close to the ones of the standard CIE observer.

The device according to the invention preferably envisages a tripod on which to rest the case of the device.

Further characteristics and advantages of the invention will emerge from the ensuing description with reference to the annexed plate of drawings, which are provided purely by way of non-limiting example, and which will be described briefly hereinafter.

Figure **1** is a diagram of an example of embodiment of the device according to the invention for analyzing the apparent colour, designed for general use, i.e., for measurement of the spectral-reflection or spectral-transmission factor, the gloss factor, and the texture.

Figure **2** is a diagram of an example of a simplified type of device, for measurement of the spectral-reflection factor and the texture in conditions of:

1. natural lighting, i.e., in the presence of daylight; and

2. non-standard artificial lighting, i.e., with a type of light source and a lighting geometry different from the ones envisaged by CIE.

In said example moreover, also the angle of measurement can be varied with respect to CIE standards.

The purpose of said example of the instrument is to evaluate the apparent colour in the actual conditions in which the object being measured is normally illuminated and seen during its use. For said purpose the lighting system will not be present in so far as the measurement will be carried out in the actual lighting conditions of the object to be measured.

The figure shows the rocking mirror 10, which can assume two operative positions 10a and 10b, in which the mirror has the function of sending the light signal to the spectrometer 6 and to the image sensor 8, respectively.

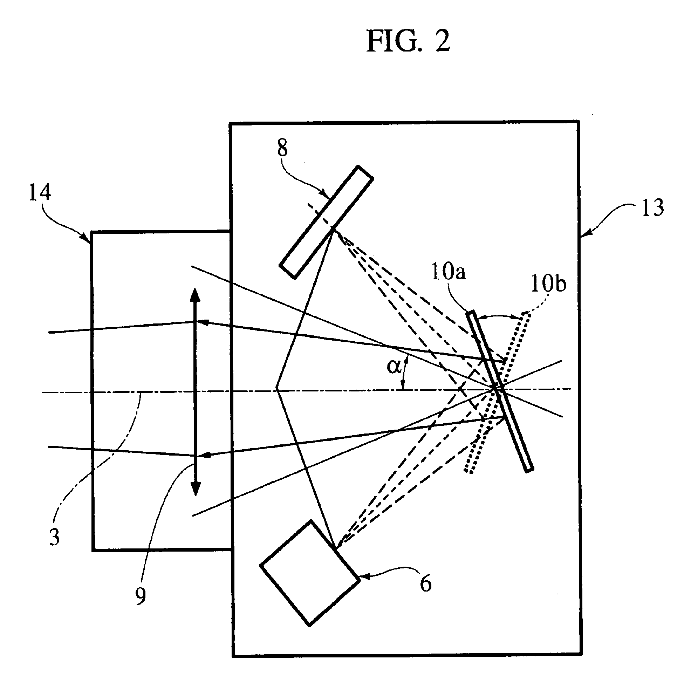

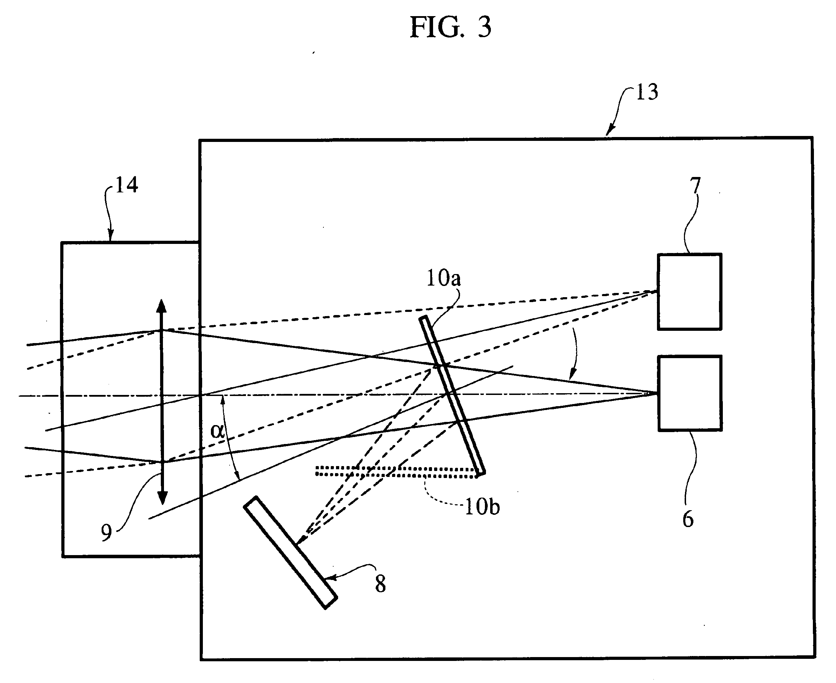

Figure **3** is a diagram of a further example of a simplified type, according to the principles described for Figure 2 (variable and non-standard lighting and angle of vision), with the mirror 10 that can be displaced between a raised, operative, position 10a and a lowered, inoperative, position 10b, which have the function of sending the light signal onto the image sensor 8 and of allowing it to reach the spectrometer 6 (or spectrometers 6 and 7).

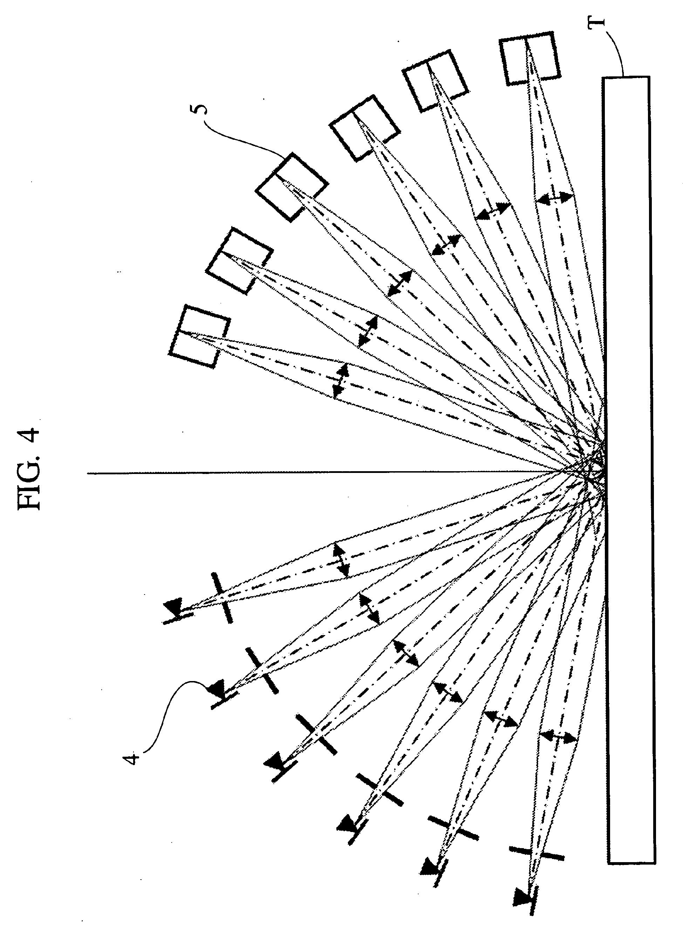

Figure **4** is a detailed diagram of the geometry used by the instrument for carrying out measurements of gonioreflectance and shininess.

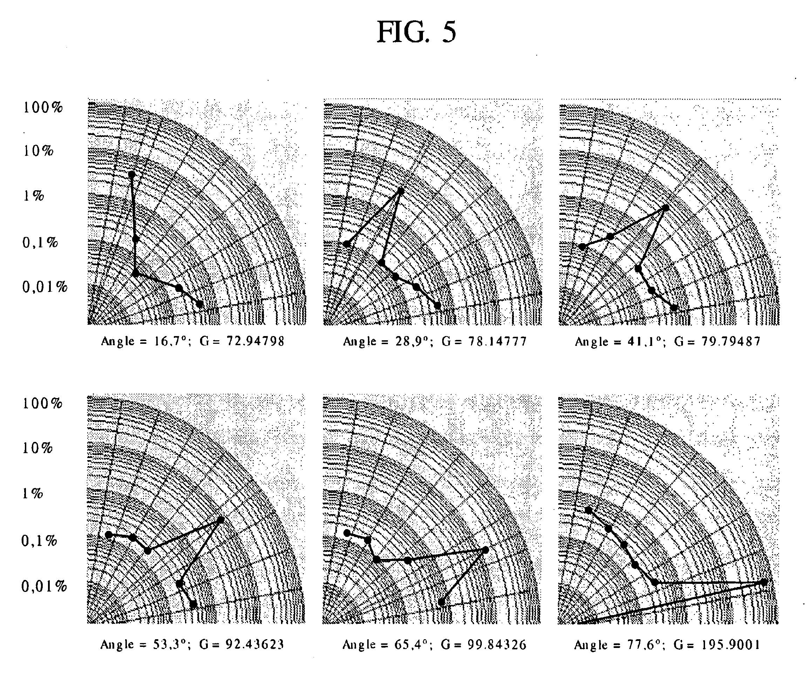

Figure **5** shows the polar graphs with logarithmic scale of the reflectance measured in six directions and for six lighting directions (6x6 gonioreflectance matrix).

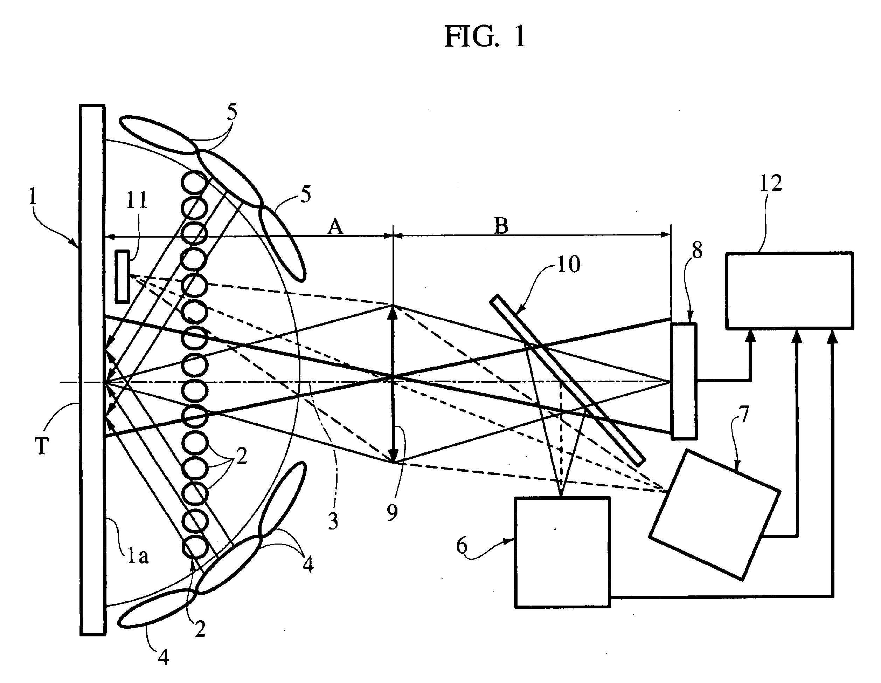

In the case of the embodiment illustrated in Figure 1, the supporting case of the device, constituting the body of the instrument, has not been illustrated, said component being instead visible in Figures 2 and 3.

In Figure **1**, the reference number 1 designates a specimen to be analyzed, having a surface of which it is desired to analyze the apparent colour. In said figure, the surface is illuminated by a ring of LEDs 2 arranged symmetrically around the optical axis 3 of the device, in a plane forming an angle of 45° with respect to said axis, so as to illuminate uniformly the specimen in a selected area T to be analyzed. Said lighting of the specimen corresponds to the 45/0° CIE geometry for the measurement of the reflection factor, but the figure is provided purely by way of example of embodiment, it being possible in any case to range between standard CIE geometries of lighting and vision, without thereby departing from the scope of the claims of the present patent.

In addition, with respect to Figure 1, it is possible to envisage, as an alternative to the set of LEDs 2, a lighting system with a gas-discharge source, or halogen source and optical fibre. In the case of lighting with LEDs or halogen source, moreover, it is possible, as an alternative to what is represented in Figure 1, to use just one spectrometer and a mobile mirror designed to send back the radiation reflected (or transmitted) alternatively by the surface being measured and by the reference specimen onto the spectrometer itself.

For measurement of the gonioreflectance matrix, as likewise of the gloss factor, a battery of LEDs 4 is envisaged with parallel-beam emission oriented on the specimen in T, and a battery of photodetectors 5 designed to collect parallel beams of light coming from the specimen T. The LEDs 4 and the photodetectors 5 are arranged symmetrically with respect to the optical axis 3 and all lie in a common plane containing the optical axis 3. As has already been mentioned, the arrangement of the batteries of LEDs 4 and photodetectors 5 is used in order to measure the gonioreflectance matrix and the gloss factor.

The device further comprises a first spectrometer 6, a possible second spectrometer 7, and an image sensor 8, which can be constituted by an array of pixels of optical sensors. An optical lens 9 set at a fixed distance from the surface of the specimen and from the image sensor 8 is used for focusing the radiation reflected by the selected area T of the specimen onto the image sensor 8.

In the case illustrated in Figure 1, the system envisages two spectrometers (6 and 7), which receive, respectively, the light signals reflected by the measurement specimen 1 and by the reference specimen 11; a half-reflecting mirror 10, acting as beam splitter, causes part of the radiation focused by the lens 9 to pass in the direction of the image sensor 8, but also causes part of said radiation to be reflected, focusing it on the spectrometer 6 used for measuring the spectral-reflection factor of the area T.

As already illustrated above, the device according to the invention further comprises a known reference specimen 11, having a surface with known characteristics, the radiation reflected by which is focused by the lens 9 directly on the second spectrometer 7. The system further comprises electronic means 12 for processing the signals at output from the image sensor 8, from the first spectrometer 6, and from the second spectrometer 7. The distances A and B are fixed in the instrument for general use.

Figure **2** illustrates an example of a simplified type, according to what has been described above, in which the device has a casing 13, constituting the body of the instrument, and a part 14 carrying the lens 9, which is mobile with respect to the body 13 in the direction of the optical axis 3. In Figure 2, parts that are common to the ones of Figure 1 are designated by the same reference numbers. In this case, a mirror oscillating between two extreme positions, designated by 10a and 10b, is provided. The solid line indicates the rays that reach the image sensor 8 when the mirror is in the position 10b, whilst the dashed line indicates the rays that reach the spectrometer 6 when the mirror is in the position 10a.

Figure **3** illustrates a further example of the instrument of a simplified type, with the fixed body 13 and the mobile part 14 carrying the lens 9, that makes use of a mirror 10 that can be displaced between a raised, operative, position 10a and a lowered, inoperative, position 10b. When the mirror is in the lowered, inoperative, condition, the lens 9 focuses the light radiation emitted by the surface to be analyzed on the first spectrometer 6 and the radiation emitted by the known reference surface 11 on the second spectrometer 7. When the mirror is in the raised, operative, position designated by 10a, the radiation is instead reflected thereby in the direction of the sensor 8.

Figure **4** shows in detail the scheme used for measuring the gonioreflectance matrix, in the particular case of six angles of incidence and six angles of reflection; in this case the gonioreflectance matrix will be a square matrix of size 6x6. The number of angles of incidence and angles of reflection for measurement of gonioreflectance depends, respectively, upon the number of LED sources 4 and photodetectors 5 used.

Figure 5 shows the polar graphs with logarithmic scale of the reflectance measured in six directions and for six lighting directions. The quantity G at the foot of each graph is the gloss factor for specular reflection corresponding to the angle considered.

Described in what follows are first a calibration method for the measurement of gonioreflectance and gloss factor, and then a method for measuring the gonioreflectance and gloss factor.

## CALIBRATION METHOD FOR THE MEASUREMENT OF GONIOREFLECTANCE AND GLOSS FACTOR

The calibration method requires the use of two reference tiles:

1. A certified white lambertian tile (the same tile can be used for the spectrophotometric calibration of the spectrometers) of which the reflection factor $R_W(\vartheta_i, \vartheta_r)$ is certified, where $\vartheta_i$ is the angle of incidence and $\vartheta_r$ is the angle of reflection. For a truly lambertian surface $R_W(\vartheta_i, \vartheta_r) = 1$ (since the light used has a very narrow bandwidth, it is not required that the reference surface should have the spectral reflection factor constant in wavelength);
2. a shiny tile made of black glass with known refractive index, in such a way that it is possible to calculate the Fresnel reflectance $\rho_F(\vartheta)$ thereof.

Once the white lambertian tile has been set in place, calibration starts. The LEDs 4 are turned on one at a time, and at each LED, each corresponding to a different angle of incidence ($\vartheta_i$), the signals $S_W(\vartheta_i, \vartheta_r)$ of the various photodetectors 5 corresponding to the different angles of reflection ($\vartheta_r$) are acquired.

Likewise, the same operation is performed using the black glass tile, and the signals $S_B(\vartheta_i, \vartheta_r)$ of the various photodetectors ($\vartheta_r$) for the different angles of incidence ($\vartheta_i$) are acquired.

The calibration matrix for the gonioreflectance is built:

$$\underset{\leftarrow \text{Photodetector } r}{} \quad \overset{\text{LED } i \rightarrow}{\begin{pmatrix} N_{1,1} & N_{1,2} & N_{1,3} & N_{1,4} & N_{1,5} & N_{1,6} \\ & N_{2,2} & & & & N_{2,6} \\ & & N_{3,3} & & & N_{3,6} \\ & & & N_{4,4} & & N_{4,6} \\ & & & & & N_{5,6} \\ N_{6,1} & & & & & N_{6,6} \end{pmatrix}},$$

where

$$N_{i,r} = \frac{\rho_F(\theta_i,\theta_i)}{S_B(\theta_i,\theta_i)} \frac{R_w(\theta_i,\theta_r)/S_w(\theta_i,\theta_r)}{R_w(\theta_i,\theta_i)/S_w(\theta_i,\theta_i)}$$

Also the values of the signals $S_B(\vartheta_i, \vartheta_i)$ corresponding to the specular reflection are stored.

## METHOD FOR MEASUREMENT OF THE GONIOREFLECTANCE AND OF THE GLOSS FACTOR

Once the specimen has been set in place, the LEDs are turned on one at a time, and at each LED, each corresponding to a different angle of incidence ($\vartheta_i$), the signals $S_S(\vartheta_i, \vartheta_r)$ of the various photodetectors 5 corresponding to the different angles of reflection ($\vartheta_r$) are acquired.

The gonioreflectance is

$$\rho_S(\theta_i,\theta_r) = S_S(\theta_i,\theta_r)N_{i,r}$$

where $N_{i,r}$ is the calibration matrix.

The gloss factor is

$$G_S(\theta_i) = \left( \frac{S_S(\theta_i, \theta_i)}{S_B(\theta_i, \theta_i)} \right) 100$$

where $S_B(\vartheta_i, \vartheta_{r=}\vartheta_i)$ are the values of the signals of the various photodetectors 5 for angles of reflection equal to the angles for lighting the LEDs ($\vartheta_i$) in the presence of the black glass tile. The table below gives the typical angles at which a preferred embodiment of the instrument operates and the corresponding Fresnel reflectances for a shiny black glass with index of refraction 1.567.

| Non-standard angles $\vartheta_i$ | 16.7° | 28.9° | 41.1° | 53.3° | 65.4° | 77.6° |
|---|---|---|---|---|---|---|
| Fresnel reflectance $\rho_i$ | 0.0489 | 0.0502 | 0.0558 | 0.0751 | 0.1352 | 0.3255 |

We refer to said quantities as "non-standard" gloss factor because the angles ($\vartheta_i = \vartheta_r$) are the ones proper to this particular embodiment of the instrument and not the ones of the current standards. The factor 100 indicates the percentage nature of these quantities.

The measurement instrument forming the subject of the present patent moreover envisages the creation of a data file, which, according to the various versions of embodiment, can contain all or just some of the following items of information on the measurements made:

- image acquired by the sensor 8;
- result of the gloss factor;
- gonioreflectance matrix;
- result of the reflection factor;
- date on which the measurement is carried out;
- temperature and humidity of the air during measurement.

Of course, without prejudice to the principle of the invention, the details of construction and the embodiments may vary widely with respect to what is described and illustrated herein purely by way of example, without thereby departing from the scope of the present invention.

## Claims

1.  A method for analyzing the apparent colour and the gonioreflectance of an object, which method comprises the steps of:

 - providing an instrument including:

 - a supporting case (13), designed to be positioned in the proximity of a surface of the object to be analyzed;
 - spectrometer means (6, 7), mounted within the supporting case (13);
 - optical means (9, 10), arranged within the case of the device, for focusing on the aforesaid spectrometer means (6, 7) both the radiation reflected by a selected area (T) of the surface of the object to be measured (1) and the radiation reflected by a reference surface (11);

 - measuring the gonioreflectance of the selected area (T) of the surface to be analyzed, with measuring means included in said instrument and comprising a battery of LED sources (4), each designed to emit a substantially collimated beam of light and send it onto the selected area (T), and a battery of photodetectors (5), each designed to collect a substantially collimated beam of light coming from the selected area (T), each of said LEDs (4) being pre-arranged for being turned on independently of the others;

 wherein said instrument further comprises:

 - electronic means (12) for reading and processing the signals at output from said spectrometer means (6, 7) and from said photodetectors (5); and
 - an image sensor (8) constituted by an array of optical sensors, for example of the CCD or CMOS type, and at least one mirror or beam-splitter (10) for focusing the image of the selected area (T) of the surface to be analyzed on said image sensor (8) so as to enable a visual and/or numeric control in the course of the operation of analysis,
- wherein the measurement takes place in two steps: a first step of calibration in which the measurement is made using one or more known or certified specimens; and a second step of measurement on the specimen of interest (T),

said method further comprising

- repositioning said instrument, without bringing said instrument in contact with the object to be analyzed, by checking that the image which is detected by said image sensor is coincident with the image corresponding to a previous measurement, for ensuring reproducibility of the measurement-acquisition geometry for monitoring the object in time and enabling a comparison measurement with a reference specimen, and

wherein said first step of calibration comprises:

- turning on in sequence said LED sources (4), each LED source corresponding to a different angle of incidence ($\vartheta_i$), and
- acquiring the signals $Ss$ ($\vartheta_i$, $\vartheta_r$) of the various photodetectors (5) corresponding to the different angles of reflection ($\vartheta_r$).

2. The method of claim 1, wherein said first step of calibration is carried out in part on a white lambertian tile, of which the reflection factor $R_w(\vartheta_i, \vartheta_r)$ is known or certified, where $\vartheta_i$ is the angle of incidence and $\vartheta_r$ is the angle of reflection, and in part on a shiny tile made of black glass with a known or certified refractive index in such a way that it is possible to calculate the Fresnel reflectance $\rho_F(\vartheta)$ thereof.

3. The method according to Claim 1, **characterized in that** it comprises providing a known reference surface (11), which is set in a position adjacent to the surface to be analyzed (T), for comparison of the measurement of spectral reflectance or transmittance, according to CIE geometries.

4. The method according to Claim 1 or Claim 3, **characterized in that** it comprises providing a system for lighting the selected area (T) of the surface to be analyzed and of the reference specimen (11) through the use of a halogen or LED light source according to the CIE standard lighting geometries for the measurement of reflectance and transmittance.

5. The method according to Claim 1, Claim 3 or Claim 4, **characterized in that** the measurement area (T) is illuminated by a ring of LEDs (2) arranged symmetrically around the optical axis (3) of the device, in a plane that forms an angle of 45° with said axis.

6. The method according to Claim 1, **characterized in that** the aforesaid electronic means (12) are programmed for evaluating the texture of the surface analyzed on the basis of the image detected by the sensor (8).

7. The method according to Claim 1, **characterized in that** said batteries of LEDs (4) and photodetectors (5) are arranged symmetrically with respect to the optimal axis (3) of the device at angles respectively ($\theta_i$) and ($\theta_r$) with respect to said optical axis (3) and lying in a common plane containing said optical axis (3).

8. The method according to Claim 4 or Claim 5, **characterized in that** said spectrometer means comprise a first spectrometer (6) and a second spectrometer (7), and **in that** said optical means are designed to focus the radiation reflected by the selected area (T) of the surface of the object on the first spectrometer (6) and the radiation reflected by the reference surface (11) on the second spectrometer (7).

9. The method according to Claim 7 or Claim 8, **characterized in that** it comprises providing a gas-discharge light source that illuminates with a flash the area (T) and the reference specimen (11).

10. The method according to Claim 6, **characterized in that** said spectrometer means comprise a single spectrometer, which can receive just the radiation reflected/transmitted by the area (T), or else, alternatively, the radiation reflected/transmitted by the area T and by the known reference surface (11), by means of said optical means.

11. The method according to Claim 10, **characterized in that** said optical means are designed to focus alternatively thereon the radiation reflected by said reference surface (11) and the radiation reflected by the selected area (T) of the surface to be analyzed.

12. The method according to Claim 7 or Claim 8, **characterized in that** the mirror that focuses the image of the selected area (T) of the surface to be analyzed on the image sensor (8) is a beam-splitter that reflects on said first spectrometer (6) the radiation reflected by said selected area (T) after it has been focused by an optical lens (9) and that transmits said radiation, enabling focusing thereof on the image sensor (8), said optical lens (9) being moreover designed to focus the radiation reflected by the reference surface (11) directly on said second spectrometer (7).

13. The method according to Claim 6, **characterized in that** it carries out measurements of reflectance and texture in any condition of lighting and of vision of the specimen to be measured (1), with a type of light source and a geometry of illumination that can differ from the ones envisaged by CIE.

14. The method according to Claim 10 or Claim 12, **characterized in that** the mirror that focuses the image of the selected area of the surface to be analyzed (1) on the image sensor (8) is a mirror oscillating alternately between two extreme positions (10a, 10b) in which it reflects the radiation in the direction of the spectrometer (6) and in the direction of the image sensor (8).

15. The method according to Claim 8 or Claim 13, **characterized in that** there is pre-arranged a mirror (10) that oscillates between a raised, operative, position, in which it reflects the radiation coming from the selected area (T) of the surface to be analyzed in the direction of the image sensor (8), and a lowered, inoperative, position, in which said mirror enables focusing of the images of the selected area (T) and of the reference surface (11) on the two respective spectrometers (6, 7).

16. The method according to any one of Claims 1 to 7, **characterized in that** the distance (A) between the optical lens (9) and the measurement area (T), as well as the distance (B) between the optical lens (9) and the image sensor, are fixed.

17. The method according to any of the preceding claims, **characterized in that** it envisages the creation of a data file containing the image acquired by the image sensor (8), the results of the measurements of gloss factor and of reflection factor, the measurement data, and the conditions of temperature and humidity during measurement.

18. The method according to Claim 7, **characterized in that** said LED sources (4) subtend as a whole an angle of close on 90° with respect to the surface (T) to be analyzed.

19. The method according to Claim 1, **characterized in that** each of said LED sources (4) is constituted by a number of individual LEDs.

**Patentansprüche**

1. Verfahren zum Untersuchen der sichtbaren Farbe und der Winkelreflektanz eines Objektes, wobei das Verfahren die nachfolgenden Schritte umfasst:

Bereitstellen eines Instrumentes, enthaltend:

ein Traggehäuse (13), das dafür ausgelegt ist, in der Nähe einer Oberfläche des zu untersuchenden Objektes positioniert zu werden;
Spektrometermittel (6, 7), die im Inneren des Traggehäuses (13) montiert sind;
optische Mittel (9, 10), die im Inneren des Gehäuses der Vorrichtung angeordnet sind, zum an den Spektrometermitteln (6, 7) erfolgenden Fokussieren sowohl der von einem ausgewählten Bereich (T) der Oberfläche des zu messenden Objektes (1) reflektierten Strahlung wie auch der von einer Bezugsoberfläche (11) reflektierten Strahlung;

Messen der Winkelreflektanz des ausgewählten Bereiches (T) der zu untersuchenden Oberfläche mit in dem Instrument enthaltenen Messmitteln, die umfassen: einen Satz von LED-Quellen (4), von denen jede dafür ausgelegt ist, einen im Wesentlichen kollimierten Lichtstrahl zu emittieren und diesen zu dem ausgewählten Bereich (T) zu senden, und einen Satz von Fotodetektoren (5), von denen jeder dafür ausgelegt ist, einen von dem ausgewählten Bereich (T) kommenden im Wesentlichen kollimierten Lichtstrahl zu sammeln, wobei jede der LEDs (4) derart vorangeordnet ist, dass sie unabhängig von den anderen angestellt werden kann;

wobei das Instrument des Weiteren umfasst:

elektronische Mittel (12) zum Lesen und Verarbeiten der Signale am Ausgang aus den Spektrometermitteln (6, 7) und aus den Fotodetektoren (5), und
einen Bildsensor (8) mit einer Zusammensetzung aus einer Feldanordnung von optischen Sensoren beispielsweise vom CCD- oder CMOS-Typ und wenigstens einem Spiegel oder Strahlteiler (10) zum Fokussieren des Bildes des ausgewählten Bereiches (T) der zu untersuchenden Oberfläche an dem Bildsensor (8), um hierdurch eine visuelle und/oder nummerische Steuerung während des Ablaufes des Untersuchungsvorganges zu ermöglichen,

wobei die Messung in zwei Schritten erfolgt, nämlich einem ersten Schritt der Kalibrierung, bei dem die Messung unter Verwendung von einer oder mehreren bekannten oder vorvermessenen Proben ausgeführt wird, und einem zweiten Schritt der Messung an der in Rede stehenden Probe (T),
wobei das Verfahren des Weiteren umfasst:

Neupositionieren des Instrumentes ohne Inkontaktbringen des Instrumentes mit dem zu untersuchenden Objekt durch Prüfen, dass das von dem Bildsensor erfasste Bild koinzident mit dem Bild entsprechend einer vorherigen Messung ist, um die Reproduzierbarkeit der Messerfassungsgeometrie zum Überwachen des Objektes in Abhängigkeit von der Zeit sicherzustellen und eine Vergleichsmessung an einer Bezugsprobe zu ermöglichen, und

wobei der erste Schritt der Kalibrierung umfasst:

in einer Abfolge erfolgendes Anstellen der LED-Quellen (4), wobei jede LED-Quelle einem anderen Einfallswinkel ($\theta_i$) entspricht, und
Erfassen der Signale $S_s(\theta_i, \theta_r)$ der verschiedenen Fotodetektoren (5) entsprechend den verschiedenen Reflexionswinkeln ($\theta_r$).

2. Verfahren nach Anspruch 1, wobei der erste Schritt der Kalibrierung teilweise an einer weißen Lambert'schen Platte, deren Reflexionsfaktor $R_w(\theta_i, \theta_r)$ mit $\theta_i$ als Einfallswinkel und $\theta_r$ als Reflexionswinkel bekannt oder vorvermessen ist, und teilweise an einer glänzenden Platte, die aus schwarzem Glas mit einem bekannten oder vorvermessenen Brechungsindex gefertigt ist, ausgeführt wird, wodurch die Berechnung der Fresnel'schen Reflektanz $\rho_F(\theta)$ hiervon möglich wird.

3. Verfahren nach Anspruch 1, **dadurch gekennzeichnet, dass** es umfasst:

Bereitstellen einer bekannten Bezugsoberfläche (11), die in eine Position benachbart zu der zu untersuchenden Oberfläche (T) gebracht wird, für einen Vergleich der Messung der spektralen Reflektanz oder Transmittanz entsprechend CIE-Geometrien.

4. Verfahren nach Anspruch 1 oder 3, **dadurch gekennzeichnet, dass** es umfasst:

Bereitstellen eines Systems zum Beleuchten des ausgewählten Bereiches (T) der zu untersuchenden Oberfläche und der Bezugsprobe (11) unter Verwendung einer Halogen- oder LED-Lichtquelle entsprechend den CIE-Standardbeleuchtungsgeometrien für die Messung von Reflektanz und Transmittanz.

5. Verfahren nach Anspruch 1, 3 oder 4, **dadurch gekennzeichnet, dass** der Messbereich (T) von einem Ring von LEDs (2), die symmetrisch um die optische Achse (3) der Vorrichtung herum angeordnet sind, in einer Ebene, die einen Winkel von 45° mit der Achse bildet, beleuchtet wird.

6. Verfahren nach Anspruch 1, **dadurch gekennzeichnet, dass** die elektronischen Mittel (12) zur Bewertung der Textur der Oberfläche aus der Untersuchung auf Grundlage des von dem Sensor (8) erfassten Bildes programmiert werden.

7. Verfahren nach Anspruch 1, **dadurch gekennzeichnet, dass** die Sätze von LEDs (4) und Fotodetektoren (5) symmetrisch in Bezug auf die optische Achse (3) der Vorrichtung unter Winkeln ($\theta_i$) beziehungsweise ($\theta_r$) in Bezug auf die optische Achse (3) angeordnet sind und in einer die optische Achse (3) enthaltenden gemeinsamen Ebene liegen.

8. Verfahren nach Anspruch 4 oder 5, **dadurch gekennzeichnet, dass** die Spektrometermittel ein erstes Spektrometer (6) und ein zweites Spektrometer (7) umfassen und die optischen Mittel dafür ausgelegt sind, die von dem ausgewählten Bereich (T) der Oberfläche des Objektes reflektierte Strahlung an dem ersten Spektrometer (6) und die von der Bezugsoberfläche (11) reflektierte Strahlung an dem zweiten Spektrometer (7) zu fokussieren.

9. Verfahren nach Anspruch 7 oder 8, **dadurch gekennzeichnet, dass** es umfasst:

Bereitstellen einer Gasentladungslichtquelle, die mit einem Blitz den Bereich (T) und die Bezugsprobe (11) erleuchtet.

10. Verfahren nach Anspruch 6, **dadurch gekennzeichnet, dass** die Spektrometermittel ein Einzelspektrometer umfassen, das nur die von dem Bereich (T) reflektierte/transmittierte Strahlung oder andernfalls alternativ die von dem Bereich (T) und von der bekannten Bezugsoberfläche (11) reflektierte/transmittierte Strahlung mittels der optischen Mittel empfängt.

11. Verfahren nach Anspruch 10, **dadurch gekennzeichnet, dass** die optischen Mittel dafür ausgelegt sind, an sich alternativ die von der Bezugsoberfläche (11) reflektierte Strahlung und die von dem ausgewählten Bereich (T) der zu untersuchenden Oberfläche reflektierte Strahlung zu fokussieren.

12. Verfahren nach Anspruch 7 oder 8, **dadurch gekennzeichnet, dass** der Spiegel, der das Bild des ausgewählten Bereiches (T) der zu untersuchenden Oberfläche an dem Bildsensor (8) fokussiert, ein Strahlteiler ist, der an dem ersten Spektrometer (6) die von dem ausgewählten Bereich (T) reflektierte Strahlung nach der Fokussierung hiervon durch eine optische Linse (9) reflektiert und die Strahlung transmittiert, wodurch eine Fokussierung hiervon an dem Bildsensor (8) ermöglicht wird, wobei die optische Linse (9) darüber hinaus dafür ausgelegt ist, die von der Bezugsoberfläche (11) reflektierte Strahlung direkt an dem zweiten Spektrometer (7) zu fokussieren.

13. Verfahren nach Anspruch 6, **dadurch gekennzeichnet, dass** es Messungen von Reflektanz und Textur bei beliebigen Parametern von Beleuchtung und Sicht der zu messenden Probe (1) mit einem Typ von Lichtquelle und einer Geometrie der Beleuchtung ausführt, die sich von denjenigen gemäß CIE unterscheiden können.

14. Verfahren nach Anspruch 10 oder 12, **dadurch gekennzeichnet, dass** der Spiegel, der das Bild des ausgewählten Bereiches der zu untersuchenden Oberfläche (1) an dem Bildsensor (8) fokussiert, ein Spiegel ist, der abwechselnd zwischen zwei Extrempositionen (10a, 10b) oszilliert, in denen er die Strahlung in Richtung des Spektrometers (6) und in Richtung des Bildsensors (8) reflektiert.

15. Verfahren nach Anspruch 8 oder 13, **dadurch gekennzeichnet, dass** ein Spiegel (10) vorangeordnet wird, der zwischen einer angehobenen Wirkposition, in der er die von dem ausgewählten Bereich (T) der zu untersuchenden Oberfläche kommende Strahlung in Richtung des Bildsensors (8) reflektiert, und einer abgesenkten Nichtwirkposition, in der der Spiegel eine Fokussierung der Bilder des ausgewählten Bereiches (T) und der Bezugsoberfläche (11) an den beiden jeweiligen Spektrometern (6, 7) ermöglicht, oszilliert.

16. Verfahren nach einem der Ansprüche 1 bis 7, **dadurch gekennzeichnet**, das der Abstand (A) zwischen der optischen Linse (9) und dem Messbereich (T) wie auch der Abstand (B) zwischen der optischen Linse (9) und dem Bildsensor fest sind.

17. Verfahren nach einem der vorhergehenden Ansprüche, **dadurch gekennzeichnet, dass** es die Erzeugung einer Datendatei vorsieht, die das von dem Bildsensor (8) erfasste Bild, die Ergebnisse der Messungen des Glanzfaktors und des Reflexionsfaktors, die Messdaten sowie die Parameter von Temperatur und Feuchtigkeit während der Messung enthält.

18. Verfahren nach Anspruch 7, **dadurch gekennzeichnet, dass** die LED-Quellen (4) insgesamt einen Winkel von nahezu 90° in Bezug auf die zu untersuchende Oberfläche (T) einschließen.

19. Verfahren nach Anspruch 1, **dadurch gekennzeichnet, dass** jede der LED-Quellen (4) aus einer Anzahl von Einzel-LEDs zusammengesetzt ist.

**Revendications**

1. Procédé d'analyse de la couleur apparente et de la gonioréflectance d'un objet, lequel procédé comprend les étapes consistant à :

   - fournir un instrument comprenant :

     -- un boîtier de support (13), conçu pour être positionné à proximité d'une surface de l'objet à analyser ;
     -- un moyen de spectrométrie (6, 7), monté dans le boîtier de support (13) ;
     -- un moyen optique (9, 10), agencé dans le boîtier du dispositif, pour diriger sur le moyen de spectrométrie précité (6, 7) à la fois le rayonnement réfléchi par une zone choisie (T) de la surface de l'objet à mesurer (1) et le rayonnement réfléchi par une surface de référence (11);

   - mesurer la gonioréflectance de la zone choisie (T) de la surface à analyser, avec un moyen de mesure inclus dans ledit instrument et comprenant une batterie de sources DEL (4), chacune étant conçue pour émettre un faisceau sensiblement collimaté de lumière et l'envoyer à la zone choisie (T), et une batterie de photodétecteurs (5), chacun étant conçu pour collecter un faisceau sensiblement collimaté de lumière provenant de la zone choisie (T), chacune desdites DEL (4) étant préagencée pour être activée indépendamment des autres ;

   dans lequel ledit instrument comprend en outre :

     - un moyen électronique (12) pour lire et traiter les signaux au niveau de la sortie dudit moyen de spectrométrie (6, 7) et desdits photodétecteurs (5), et
     - un capteur d'image (8) constitué par un réseau de capteurs optiques, par exemple du type CCD ou CMOS, et au moins un miroir ou un séparateur de faisceau (10) pour diriger l'image de la zone choisie (T) de la surface à analyser sur ledit capteur d'image (8) de sorte à permettre un contrôle visuel et/ou numérique au cours de l'opération d'analyse,
     - dans lequel la mesure se déroule en deux étapes : une première étape d'étalonnage au cours de laquelle la mesure est effectuée en utilisant une ou plusieurs éprouvettes connues ou certifiées ; et une seconde étape de mesure sur l'éprouvette d'intérêt (T),

   ledit procédé comprenant en outre

     - le repositionnement dudit instrument, sans amener ledit instrument en contact avec l'objet à analyser, en vérifiant que l'image qui est détectée par ledit capteur d'image coïncide avec l'image correspondant à une mesure précédente, pour garantir la reproductibilité de la géométrie d'acquisition-de mesure pour surveiller l'objet dans le temps et permettre une mesure de comparaison avec une éprouvette de référence et

   dans lequel ladite première étape d'étalonnage comprend :

     - l'activation en séquence desdites sources DEL (4), chaque source DEL correspondant à un angle différent d'incidence ($\vartheta_i$), et
     - l'acquisition des signaux $S_s$ ($\vartheta_i$, $\vartheta_r$) des divers photodétecteurs (5) correspondant aux angles différents de réflexion ($\vartheta_r$).

2. Procédé selon la revendication 1, dans lequel ladite première étape d'étalonnage est réalisée en partie sur une tuile lambertienne blanche, dont le facteur de réflexion $R_w$ ($\vartheta_i$, $\vartheta_r$) est connu ou certifié, où $\vartheta_i$ est l'angle d'incidence et $\vartheta_r$ est l'angle de réflexion, et en partie sur une tuile brillante formée à partir de verre noir avec un indice de réfraction connu ou certifié de telle manière qu'il est possible de calculer la réflectance de Fresnel $\rho_F$ ($\vartheta$) de celle-ci.

3. Procédé selon la revendication 1, **caractérisé en ce qu'**il comprend la fourniture d'une surface de référence connue (11), qui est placée dans une position adjacente à la surface à analyser (T), pour comparaison de la mesure de réflectance ou transmittance spectrale, selon des géométries CIE.

4. Procédé selon la revendication 1 ou la revendication 3, **caractérisé en ce qu'**il comprend la fourniture d'un système pour éclairer la zone choisie (T) de la surface à analyser et de l'éprouvette de référence (11) par l'utilisation d'une source de lumière DEL ou halogène selon les géométries d'éclairage standard CIE pour la mesure de réflectance et de transmittance.

5. Procédé selon la revendication 1, la revendication 3 ou la revendication 4, **caractérisé en ce que** la zone de mesure (T) est éclairée par un groupe de DEL (2) agencées symétriquement autour de l'axe optique (3) du dispositif, dans un plan qui forme un angle de 45° avec ledit axe.

6. Procédé selon la revendication 1, **caractérisé en ce que** le moyen électronique (12) précité est programmé pour évaluer la texture de la surface à analyser sur la base de l'image détectée par le capteur (8).

7. Procédé selon la revendication 1, **caractérisé en ce que** lesdites batteries de DEL (4) et de photodétecteurs (5) sont agencées symétriquement par rapport à l'axe optique (3) du dispositif à des angles respectivement ($\theta_i$) et ($\theta_r$) par rapport audit axe optique (3) et se situant dans un plan commun contenant ledit axe optique (3).

8. Procédé selon la revendication 4 ou la revendication 5, **caractérisé en ce que** ledit moyen de spectrométrie comprend un premier spectromètre (6) et un second spectromètre (7) et **en ce que** ledit moyen optique est conçu pour diriger le rayonnement réfléchi par la zone choisie (T) de la surface de l'objet sur le premier spectromètre (6) et le rayonnement réfléchi par la surface de référence (11) sur le second spectromètre (7).

9. Procédé selon la revendication 7 ou la revendication 8, **caractérisé en ce qu'**il comprend la fourniture d'une source de lumière de décharge gazeuse qui éclaire avec un flash la zone (T) et l'éprouvette de référence (11).

10. Procédé selon la revendication 6, **caractérisé en ce que** ledit moyen de spectrométrie comprend un seul spectromètre, qui peut recevoir seulement le rayonnement réfléchi/transmis par la zone (T), ou sinon, alternativement, le rayonnement réfléchi/transmis par la zone T et par la surface de référence connue (11), par ledit moyen optique.

11. Procédé selon la revendication 10, **caractérisé en ce que** ledit moyen optique est conçu pour diriger alternativement dessus le rayonnement réfléchi par ladite surface de référence (11) et le rayonnement réfléchi par la zone choisie (T) de la surface à analyser.

12. Procédé selon la revendication 7 ou la revendication 8, **caractérisé en ce que** le miroir qui dirige l'image de la zone choisie (T) de la surface à analyser sur le capteur d'image (8) est un séparateur de faisceau qui réfléchit sur ledit premier spectromètre (6) le rayonnement réfléchi par ladite zone choisie (T) après avoir été dirigé par une lentille optique (9) et qui transmet ledit rayonnement, permettant de diriger celui-ci sur le capteur d'image (8), ladite lentille optique (9) étant également conçue pour diriger le rayonnement réfléchi par la surface de référence (11) directement sur ledit second spectromètre (7).

13. Procédé selon la revendication 6, **caractérisé en ce qu'**il réalise des mesures de réflectance et de texture dans une condition quelconque d'éclairage et de vision de l'éprouvette à mesurer (1), avec un type de source de lumière et une géométrie d'éclairage qui peuvent différer de ceux envisagés par CIE.

14. Procédé selon la revendication 10 ou la revendication 12, **caractérisé en ce que** le miroir qui dirige l'image de la zone choisie de la surface à analyser (11) sur le capteur d'image (8) est un miroir oscillant alternativement entre deux positions extrêmes (10a, 10b) dans lesquelles il réfléchit le rayonnement dans la direction du spectromètre (6) et dans la direction du capteur d'image (8).

15. Procédé selon la revendication 8 ou la revendication 13, **caractérisé en ce qu'**un miroir (10) est préagencé qui oscille entre une position élevée, opérationnelle, dans laquelle il réfléchit le rayonnement provenant de la zone choisie (T) de la surface à analyser dans la direction du capteur d'image (8) et une position abaissée, inopérationnelle, dans laquelle ledit miroir permet de diriger les images de la zone choisie (T) et de la surface de référence (11) sur les deux spectromètres respectifs (6, 7).

16. Procédé selon l'une quelconque des revendications 1 à 7, **caractérisé en ce que** la distance (A) entre la lentille optique (9) et la zone de mesure (T), de même que la distance (B) entre la lentille optique (9) et le capteur d'image sont fixes.

17. Procédé selon l'une quelconque des revendications précédentes, **caractérisé en ce qu'**il envisage la création d'un fichier de données contenant l'image acquise par le capteur d'image (8), les résultats des mesures du facteur de brillance et du facteur de réflexion, les données de mesure et les conditions de température et d'humidité pendant la mesure.

**18.** Procédé selon la revendication 7, **caractérisé en ce que** lesdites sources DEL (4) sous-tendent dans l'ensemble un angle de fermeture sur 90° par rapport à la surface (T) à analyser.

**19.** Procédé selon la revendication 1, **caractérisé en ce que** chacune desdites sources DEL (4) est constituée d'un certain nombre de DEL individuelles.

FIG. 1

EP 1 914 529 B1

# FIG. 2

EP 1 914 529 B1

# FIG. 3

EP 1 914 529 B1

FIG. 4

EP 1 914 529 B1

# FIG. 5

Angle = 16.7°; G = 72.94798

Angle = 28.9°; G = 78.14777

Angle = 41.1°; G = 79.79487

Angle = 53.3°; G = 92.43623

Angle = 65.4°; G = 99.84326

Angle = 77.6°; G = 195.9001

EP 1 914 529 B1

**EP 1 914 529 B1**

**REFERENCES CITED IN THE DESCRIPTION**

**Patent documents cited in the description**

- DE 102004034167 A1
- EP 0001178 A1
- EP 0335192 A2